# EUROPÄISCHE PATENTSCHRIFT

(11) **EP 0 897 449 B1**
(45) Veröffentlichungstag und Bekanntmachung des Hinweises auf die Patenterteilung: **23.01.2002**
(21) Anmeldenummer: 97923866.4
(22) Anmeldetag: 09.05.1997
(51) Int. Cl.: E05F 15/18, H02K 41/02, B60L 13/10, B61B 13/08

(54) **ELEKTROMAGNETISCHES ANTRIEBSSYSTEM FÜR MAGNETISCHE SCHWEBE- UND TRAGESYSTEME**
ELECTROMAGNETIC DRIVE SYSTEM FOR MAGNETIC LEVITATION AND CARRYING SYSTEMS
SYSTEME D'ENTRAINEMENT ELECTROMAGNETIQUE POUR SYSTEMES MAGNETIQUES DE SUSTENTATION ET DE SUPPORT

(30) Priorität: 08.05.1996 DE 19618518
(43) Veröffentlichungstag der Anmeldung: 24.02.1999
(73) Patentinhaber: Schuster, Heinz-Peter, 83064 Raubling (DE)
(72) Erfinder: Schuster, Heinz-Peter, 83064 Raubling (DE)
(86) Internationale Anmeldenummer: EP9702397
(87) Internationale Veröffentlichungsnummer: WO9742389

(56) Entgegenhaltungen:
- EP-A- 0 216 452
- WO-A-94/13055
- DE-A- 2 151 150

## Beschreibung

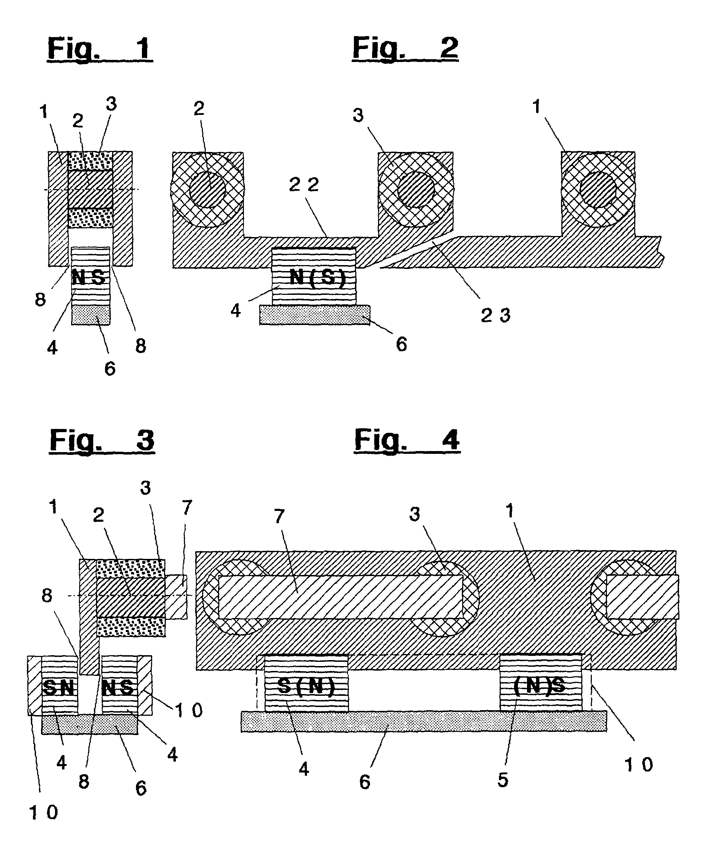

Die vorliegende Erfindung sieht vor,
elektrisch erregte Magnete gemäß Fig. 3 bis 8, Fig. 10 und 11 sowie Fig. 13 bis 16 in einer Weise zu bereits bekannten Dauermagnetischen Trage-/Schwebe-Anordnungen hinzuzufügen, die geeignet ist, den magnetische Widerstand innerhalb des magnetisch teilgesättigten Materials so zu verändern, daß eine Kraft entsteht, die auf den Dauermagneten einwirkt und dadurch dessen Bewegung herbeiführt.

Die vorliegende Erfindung sieht ferner vor,
elektrisch erregte Magnete gemäß Fig. 1, 2 und 9 in einer bisher unbekannten Weise mit ferromagnetischem Material und Dauermagneten zu kombinieren, wodurch ein neues integriertes Magnet-Schwebe- und Antriebssystem für Lasten entsteht.

### Stand der Technik

Nicht näher eingegangen werden soll an dieser Stelle auf alle mechanischen Standardlösungen, wo Lasten mittels Rollen an Schienen hängen und mit Zahnriemen, Ketten oder anderen mechanischen Antrieben horizontal bewegt werden.

Bei Automatiktüren (kraftbetätigten Schiebetüren, automatischen Fußgängerschiebetüren) sind die Türflügel an deren oberen Ende mit Rollen versehen, die auf einer Schiene hin- und herbewegt werden können. Die Bewegung erfolgt mittels Elektromotor, Getriebe, Riemen oder Ketten über Umlenkrollen.

Die Umwandlung der elektrischen Energie, die der Elektromotor aufnimmt, in mechanische Energie, erfolgt über einen Luftspalt auf den Rotor des Elektromotors. Bei der vorliegenden Erfindung geschieht diese Umwandlung ohne den Rückschluß über einen Luftspalt.

Magnetische Trage- oder Schwebesysteme kennt man vom Hochgeschwindigkeitszug TRANSRAPID. Das Tragen der Last (vertikal) wie auch deren Fortbewegung (horizontal) erfolgen durch elektronisch geregelte Elektromagnete, deren elektromagnetische Kraftfelder über einen Luftspalt vom ortsfesten Fahrweg aus auf das bewegliche Vehikel einwirken. Bei der vorliegenden Erfindung geschieht diese Umwandlung ohne den Rückschluß über einen Luftspalt.

Das US Patent 4,324,185 (Vinson) betrifft ein Dauermagnet-Schwebe- und Transportsystem. Die Anordnung besteht aus ferromagnetischem Material, Dauermagneten und elektrischen Spulen. Die Bewegung entsteht dadurch, daß die elektromagnetischen Kraftfelder über einen Luftspalt die Bewegung der Dauermagnete bewirken. Im Gegensatz zu der vorliegenden Erfindung ist im Falle des US Patents 4,324,185 eine magnetische Sättigung für die Bewegung nicht erforderlich und würde sich sogar nachteilig auswirken.

Die effizientesten dauermagnetischen Trage- und Schwebesysteme kennt man aus dem Patent DE 3635258 C1, im wesentlichen inhaltsgleich mit EP0234543A1 und EP0356370A1 (Peter Schuster). In all diesen verschiedenen Fällen wird durch Verwendung von Dauermagneten und ferromagnetischen Tragschienen ohne elektrische/elektronische Regelung ein vertikal stabiler und belastbarer Schwebe- und Trageeffekt erzielt, allerdings ohne integrierte Möglichkeit eines Antriebes.

Das Magnetschwebesystem mit Permanentmagneten DE 3719587 A1 (Weh) betrifft ein kombiniertes Trag- und Führverhalten, aber im Gegensatz zu der vorliegenden Erfindung mit dem Hauptzweck, seitliche Führkräfte zu erzeugen und ein Auswandern des Erregerteils aus seiner Mittellage zu verhindern.

### Aufgabe und Lösung

Die erfindungsgemäße Aufgabe besteht darin, eine Bewegung der Last herbeizuführen unter weitmöglicher Verwendung der bereits für den Schwebe- und Trageeffekt verwendeten Bauteile und zwar energie- und verschleißarm ohne Rückschluß über einen Luftspalt.

Die Lösung dieser Aufgabe erfolgt durch die Merkmale des Anspruches 1. Weitere Ausgestaltungen des Erfindungsgedankens zeigen die Unteransprüche 2 bis 13. Die Erfindung wird nachstehend anhand mehrerer Ausführungsbeispiele unter Bezug auf die Zeichnungen erläutert.

Gemäß Fig. 1 , 2 sind zwei parallel zueinander angeordnete ferromagnetische Trägerprofile 1 durch dazwischen fest angeordnete und zueinander beabstandete elektrische Spulen 3 mit Eisenkern 2 mechanisch miteinander verbunden. Im unteren Bereich ist zwischen den Tragschienen mindestens ein horizontal magnetisierter Dauermagnet 4 angeordnet, dessen Breite geringer ist als die lichte Weite der beiden Tragschienen, sodaß ein Leerraum entsteht. Um zu gewährleisten, daß der Leerraum als Luftspalt auf beiden Seiten des Magnets symmetrisch verteilt wird, ist der Magnet mittels Rollen, Gleitmaterial oder anderer mechanischer Mittel mittig zwischen den Tragschienen zu führen.

Das Kraftfeld des Dauermagneten 4 tritt über den Luftspalt 8 in die erste Tragschiene 1 ein, wandert durch einen oder mehrere am nächsten positionierte magnetisch leitende Spulenkerne 2 in die zweite Tragschiene 1 hinüber und schließt sich, indem es über den Luftspalt 8 die andere Seite des Dauermagnets 4 erreicht. Durch diese Anordnung entsteht eine dauermagnetische Schwebewirkung, ohne daß zunächst die elektrischen Spulen 3 mit Strom beschickt werden. Die Dimensionierung von Tragschiene 1, Dauermagnet 4 sowie Spulenkern 2 sind so gewählt, daß sich Tragschiene und Spulenkern im Zustand einer magnetischen Teilsättigung befinden.

Beaufschlagt man eine oder mehrere Spulenwicklungen 3, die sich in der Nähe eines Dauermagneten befinden und deren Kerne 2 von einem Dauermagnetkraftfeld durchflossen werden, mit Gleichstrom, so entsteht im Spulenkern 2 sowie in dem Trägerprofil 1 zusätzlich ein Elektromagnetfeld, welches das Feld des Dauermagneten innerhalb des Trägerprofils 1 sowie innerhalb der Spulenkerne 2 überlagert. Abhängig von der Polung des Stroms bewirkt die Kopplung der beiden Kraftfelder, daß der Dauermagnet von einer benachbarten Spule abgestoßen oder angezogen wird und sich somit mit seiner Last in eine bestimmte Richtung bewegt.

In Bezug auf die Energiebilanz zeichnet sich das vorliegende Antriebssystem dadurch aus, daß die Kopplung des Elektromagnetfeldes mit demjenigen der Dauermagneten weitgehend im Trägerprofil stattfindet und nicht in einem Luftspalt. Das führt zu einem sehr kleinen magnetischen Widerstand des gesamten Systems, ein wesentlicher (positiver) Unterschied zu rotierenden elektrischen Maschinen, bei denen das Stator- und das Rotorfeld im Luftspalt gekoppelt werden (Stand der Technik).

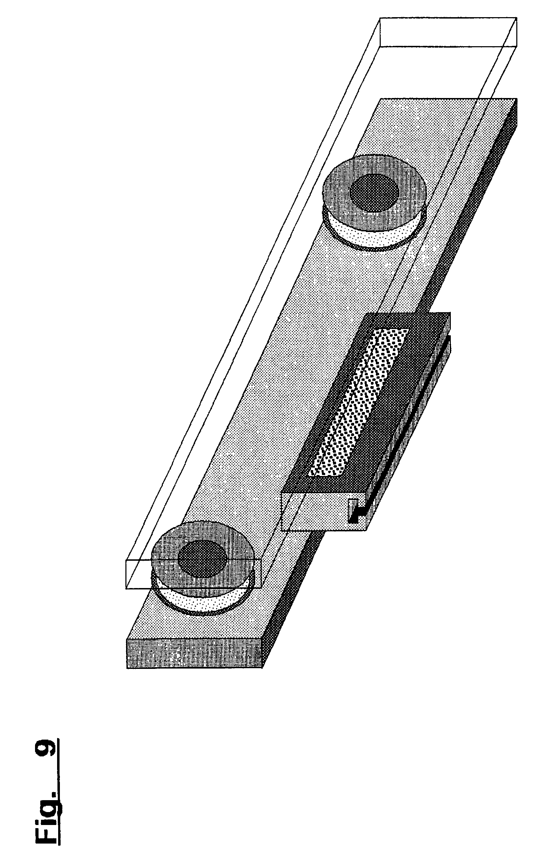

Der Vorteil hiervon ist eine einfachere Bauweise sowie eine effizientere und sparsamere Umwandlung der elektrischen in eine kinetische Energie (Schrägansicht Prinzip: Fig. 9)

Gemäß Fig. 3, 4 sind ein ferromagnetisches Trägerprofil 1 und mehrere Dauermagnete 4 dergestalt angeordnet, daß ein stabiler Schwebe- und Tragezustand der Dauermagnetgruppe erreicht wird. Die Bewegung der Magnetgruppe wird dadurch erreicht, daß mehrere Elektromagnete senkrecht zu dem Trägerprofil angeordnet werden, deren dem Trägerprofil abgewandten Enden der Spulenkerne jeweils paarweise oder durchgängig mit einem Joch 7 aus ferromagnetischem Material verbunden sind (Fig. 4). Beschickt man die einzelnen Spulen mit geeignet gepolter elektrischer Energie, verändert sich in dem Trägerprofil durch Kopplung der Magnetfelder die magnetische Sättigung, was letztlich zu einer Bewegung der Magnetgruppe 4, 5 führt.

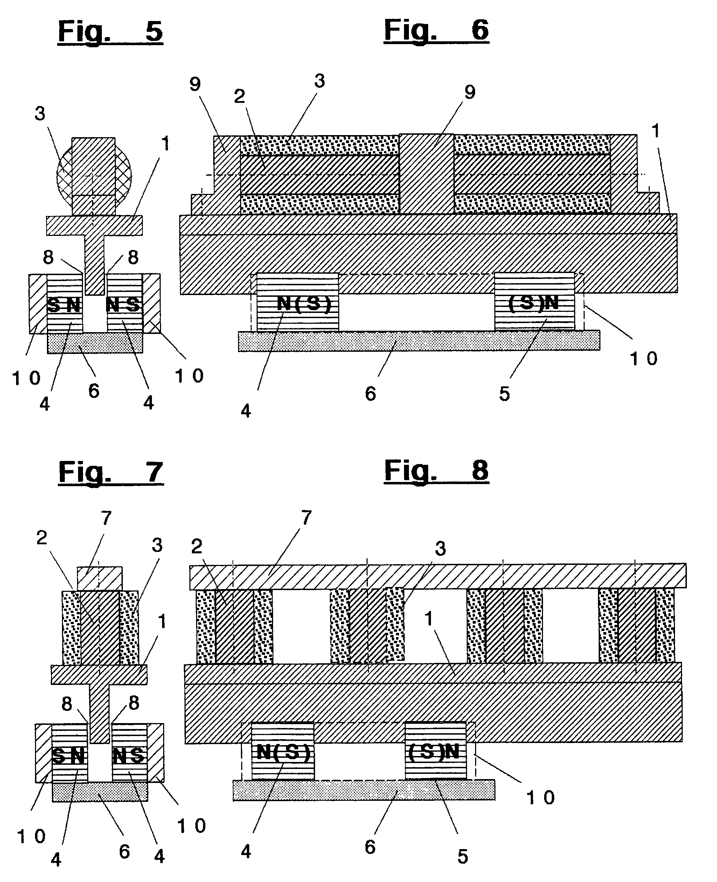

Gemäß Fig. 5, 6 sind ein ferromagnetisches Trägerprofil 1 und mehrere Dauermagnete 4 dergestalt angeordnet, daß ein stabiler Schwebe- und Tragezustand der Dauermagnetgruppe erreicht wird. Die Bewegung der Magnetgruppe 4, 5 wird dadurch erreicht, daß mehrere Elektromagnete 2, 3 parallel auf der Oberseite der Tragschiene angeordnet werden, wobei die beiden Enden der Spulenkerne mit Polschuhen 9 aus ferromagnetisch Material mit der Tragschiene verbunden werden (Fig. 6).

Beschickt man die einzelnen Spulen mit geeignet gepolter elektrischer Energie, verändert sich in dem Trägerprofil durch Kopplung der Magnetfelder die magnetische Sättigung, was zu einer Bewegung der Magnetgruppe 4, 5 führt.

Gemäß Fig. 7, 8 sind eine ferromagnetische Tragschiene 1 und mehrere Dauermagnete 4, 5 dergestalt angeordnet, daß ein stabiler Schwebe- und Tragezustand der Dauermagnetgruppe erreicht wird. Die Bewegung der Magnetgruppe 4, 5 wird dadurch erreicht, daß mehrere Elektromagnete 2, 3 senkrecht auf der Tragschiene angeordnet werden, deren der Tragschiene abgewandten Enden der Spulenkerne jeweils paarweise oder durchgehend mit einem Joch 7 aus ferromagnetischem Material verbunden sind (Fig. 8). Beschickt man die einzelnen Spulen mit geeignet gepolter elektrischer Energie, verändert sich in dem Trägerprofil durch Kopplung der Magnetfelder die magnetische Sättigung, was zu einer Bewegung der Magnetgruppe 4, 5 führt.

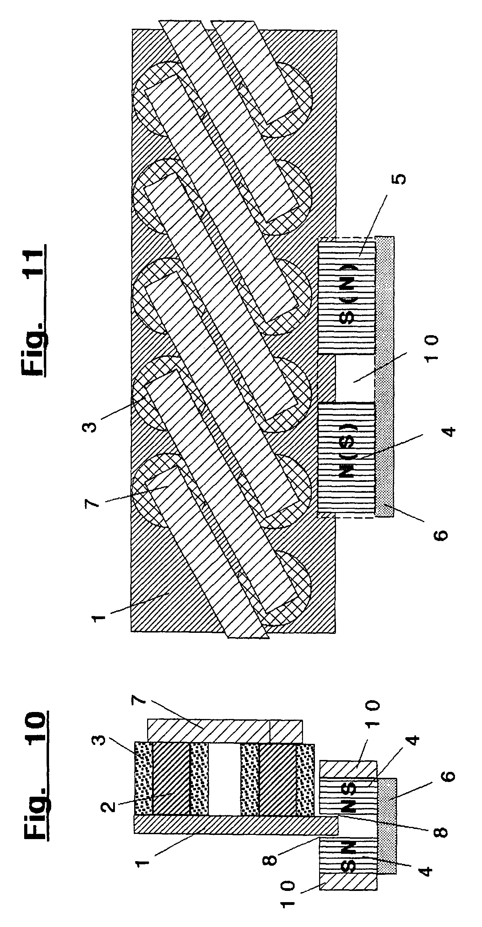

Gemäß Fig. 10, 11 sind eine ferromagnetische Tragschiene 1 und mehrere Dauermagnete 4 dergestalt angeordnet, daß ein stabiler Schwebe- und Tragezustand der Dauermagnetgruppe erreicht wird. Die Bewegung der Magnetgruppe 4, 5 wird dadurch erreicht, daß mehrere Elektromagnete 2, 3 senkrecht zur Tragschiene angeordnet werden, deren der Tragschiene abgewandten Spulenkern-Enden jeweils paarweise mit einem ferromagnetischem Joch 7 verbunden sind (Fig. 11).

Die durch ein Joch 7 verbundenen Spulenpaare 3 sind schräg überlappend auf der Tragschiene angeordnet.

Beschickt man die einzelnen Spulen mit geeignet gepolter elektrischer Energie, verändert sich in dem Trägerprofil durch Kopplung der Magnetfelder die magnetische Sättigung, was zu einer Bewegung der Magnetgruppe 4, 5 führt.

Die schräge Überlappung der Spulenanordnungen ermöglicht eine höhere Schrittgenauigkeit, d.h eine genauere Positionierung der Bewegung.

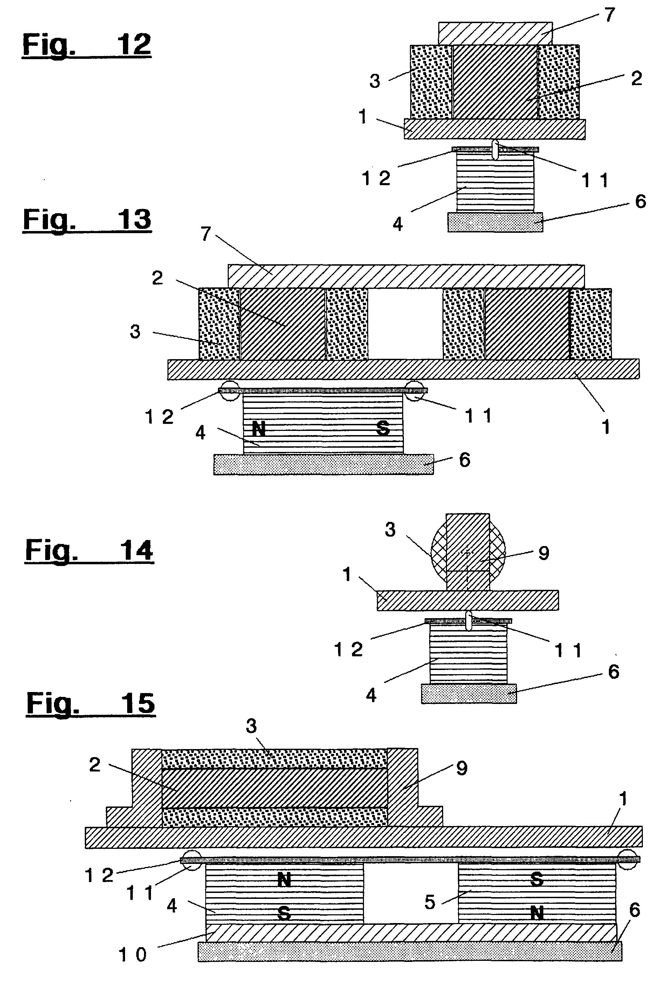

Gemäß Fig. 12 und Fig. 13 sind ein horizontal ausgerichtetes ferromagnetisches Trägerprofil 1 und mindestens ein Dauermagnet 4 dergestalt angeordnet, daß ein stabiler Tragezustand des Dauermagneten 4 erreicht wird, wobei ein Stützrad 11 für eine Beabstandung des Dauermagneten von der Tragschiene sorgt. Die Bewegung des Dauermagneten 4 wird dadurch erreicht, daß mehrere Elektromagnete 2, 3 senkrecht auf der dem Tragmagnet 4 gegenüberliegenden, also oberen Seite der Tragschiene angeordnet werden, deren dem Trägerprofil abgewandten Spulenkern-Enden jeweils paarweise oder durchgehend mit einem ferromagnetischem Joch 7 verbunden sind (Fig. 12, 13).

Beschickt man die einzelnen Spulen mit geeignet gepolter elektrischer Energie, verändert sich in dem Trägerprofil durch Kopplung der Magnetfelder die magnetische Sättigung, was zu einer Bewegung der Magnetgruppe 4, 5 führt.

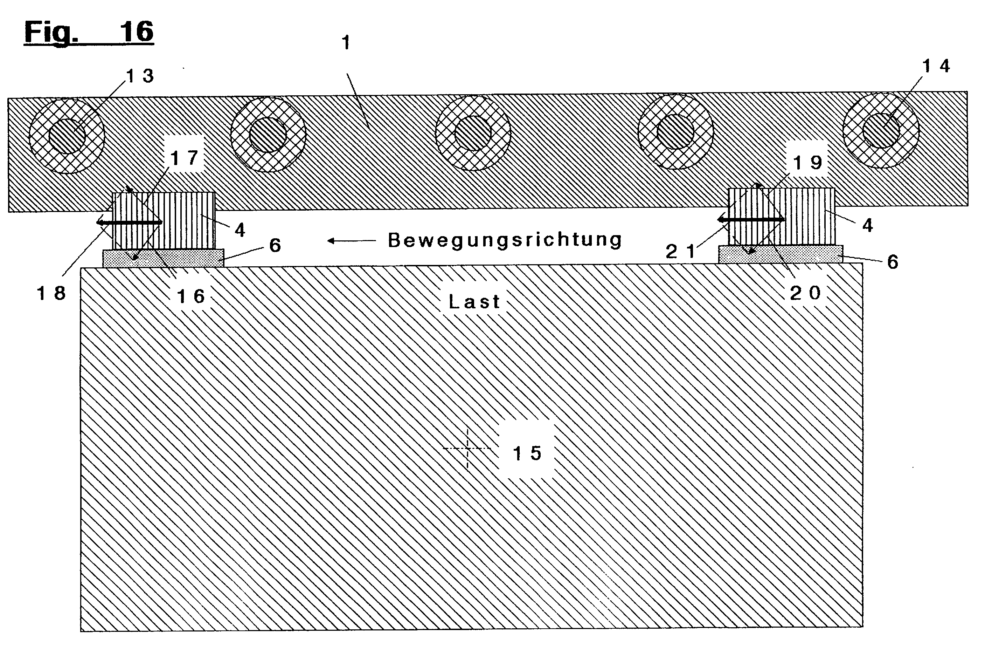

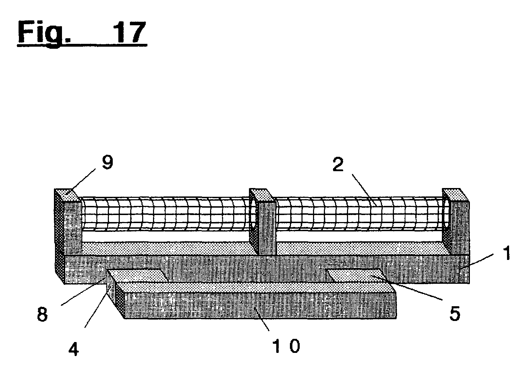

Gemäß Fig. 14 und Fig. 15 sind ein horizontal ausgerichtetes ferromagnetisches Trägerprofil 1 und ein vertikal umgekehrt gepoltes Dauermagnetpaar 4 dergestalt angeordnet, daß ein stabiler Tragezustand des Dauermagneten erreicht wird, wobei ein Stützrad 11 für eine Beabstandung des Dauermagneten von der Tragschiene sorgt.

Die Bewegung des Dauermagneten 4 wird dadurch erreicht, daß mehrere Elektromagnete 2, 3 parallel auf der dem Tragmagnet 4 gegenüberliegenden, also oberen Seite der Tragschiene angeordnet werden, wobei die beiden Enden der Spulenkerne mit je einem Joch 9 aus ferromagnetisch Material mit dem Trägerprofil verbunden werden.

### Sensorik

Zur Bestimmung des optimalen Zeitpunkts, wann zum Zwecke einer kontinuierlichen Bewegung der Dauermagnete 4, 5 mit der Last die jeweiligen Spulenwicklungen 3 mit Strom zu versorgen sind, kann eine Sensorik die jeweilige Position der dauermagnetischen Lastaufhängung erfassen.

Um den Aufwand für zusätzliche Bauteile zu vermeiden, sollen bereits vorhandene Bauteile hierfür geeignet eingesetzt werden.

Zu diesem Zweck können alle Spulenwicklungen zusätzlich mit einem schwachen Wechselstrom (Hochfrequenz) beschickt werden. Dabei kann sich auch eine Überlagerung des Gleichstroms ergeben. Die gesamthafte Auswertung aller Spulenströme (messen und auswerten der magnetischen Sättigung der einzelnen Spulenkerne) läßt eine genaue Lokalisierung der Dauermagnete zu.

Anstelle von Hochfrequenz-Überlagerung kann die Schaltung des Spulenstromes aber auch durch geeignet positionierte marktübliche Sensoren unterschiedlichster Arbeitsprinzipien gesteuert werden.

### Verhinderung von Dreh-/Kippbewegung beim Anfahren

In der Regel hängt eine Last an mindestens zwei Trageköpfen, also an zwei magnetischen Schwebe-/Tragesystemen (Fig. 16).

In jenen Fällen, wo keine mechanische oder elektronische Regelung das federnde Schwingen der Last verhindert, kann zu Beginn der Bewegung ein unerwünschtes Dreh-/Kippverhalten 16, 19 der Last eintreten, welches umso größer ist, je größer die vertikale Entfernung zwischen dem Schwerpunkt 15 der Last und dem Angriffspunkt des Antriebs ist.

Dies wird gemäß einer Ausgestaltung der Erfindung dadurch verhindert, daß die in Richtung der gewünschten Bewegung voraus liegende Spule 13 (Fig. 16) mit einem Gleichstrom versorgt wird, dessen Polung einen Zug 17 auf die (in Fahrtrichtung gesehen) erste Dauermagnetgruppe 4 ausübt. Dieser Zug 17, der aus der Änderung der magnetischen Sättigung in der Tragschiene 1 und im Kern der Spule 13 entsteht, wirkt der Dreh-/Kipp-Kraft 16 dergestalt entgegen, daß ein resultierender Kraft- oder Fahrvektor 18 verbleibt, dessen Wirkung im positivsten Falle genau in Fahrtrichtung zeigt.

Das Dreh-/Kippverhalten der Last kann auch dadurch vermindert werden, daß die bezogen auf die Richtung der gewünschten Bewegung hinter der letzten Dauermagnetgruppe angeordnete Spule 14 mit einem Gleichstrom versorgt wird, dessen Polung einen Druck 20 in Fahrtrichtung gesehen schräg nach unten auf die (in Fahrtrichtung gesehen) letzte Dauermagnetgruppe ausübt. Der Dreh-/Kippvektor 19 wird durch die Schubkraft der Spule 14, entstanden durch die Änderung der magnetischen Sättigung in der Tragschiene 1 und im Kern der Spule 14, bei geeigneter Auslegung aller Bauteile, Stromstärken und -richtungen dem Dreh-/Kippverhalten optimal entgegenwirken. In einem solchen Falle zeigt der aus 19 und 20 resultierende Schubvektor 21 genau in Fahrtrichtung (Fig. 16).

### Absenkung

Automatiktürflügel haben gegenüber der unebenen Fußboden-Oberfläche einen mehrere Millimeter großen Luftspalt (zur Zeit bis zu etwa 7 mm). Zur Reduzierung von unnötigem Energieverlust und als zusätzlicher Einbruchschutz (aber auch für andere Einsatzgebiete) ist es wünschenswert, kraft- und handbetätigte Türflügel, Tore und andere horizontal bewegliche Objekte (zum Beispiel bei Nacht während des verschlossenen Zustands) bis zum Boden absenken zu können.

Diese Aufgabe kann erfindungsgemäß dadurch gelöst werden, daß die genau über die jeweiligen Dauermagnetgruppen befindlichen Spulen mit einem stärkeren als zum Bewegen nötigen Gleichstromimpuls beschickt werden, welcher so orientiert ist, daß ein dem Tragemagnetfeld entgegengerichtetes Elektromagnetfeld entsteht.

Dieses überlagerte Feld kompensiert das zum Tragen benötigte Dauermagnetfeld so stark, daß die Halte-/ Schwebefunktion nicht mehr gewährleistet ist und die Last (z.B. Türflügel) bis zum Boden absinkt.

Wenn die Dauermagnetgruppe mit der Last wieder auf Betriebsebene angehoben werden soll, kann diese Aufgabe erfindungsgemäß dadurch gelöst werden, daß dieselben genau über den Dauermagnetgruppen befindlichen Spulen mit einem entgegengesetzten Stromimpuls versehen werden mit dem Effekt, ein Elektromagnetfeld aufzubauen, welches das Tragemagnetfeld derart verstärkt, daß die Last wieder auf normale Halte-/Schwebe-/Betriebsebene angehoben wird.

### Bezugszeichenliste:

- 1:: Trägerprofil, Tragschiene, Profilwand (ferromagnetisches Material)
- 2:: Spulenkern (ferromagnetisches Material)
- 3:: Spulenwicklung, Spule
- 4:: Dauermagnet (horizontal gepolt)
- 5:: Zusätzlicher Dauermagnet (horizontal gepolt)
- 6:: Tragekopf (nichtmagnetisches Material)
- 7:: Joch (ferromagnetisches Material)
- 8:: Luftspalt
- 9:: Polschuh (ferromagnetisches Material)
- 10:: Rückschlußeisen (ferromagnetisches Material)
- 11:: Abstands-Stütz-Rad
- 12:: Lagerung vom Abstands-Stütz-Rad (nichtmagnetisches Material)
- 13:: Voraus liegende Spule
- 14:: Hintere Spule
- 15:: Schwerpunkt
- 16:: Dreh-/Kipp-Vektor vorn
- 17:: Zug-Vektor vorn
- 18:: Resultierender Zug-Vektor vorn
- 19:: Dreh-/Kipp-Vektor hinten
- 20:: Druck-Vektor hinten
- 21:: Resultierender Schub-Vektor hinten
- 22:: Aussparung des Trägerprofils
- 23:: Luftspalt

## Patentansprüche

1. Elektromagnetisches Antriebssystem für magnetische Schwebe- und Tragesysteme
- mit mindestens einem Dauermagneten (4), an dem die Last befestigt ist, und mit mindestens einem ortsfesten weichmagnetischen Trägerprofil (1), wobei die Polfläche des Dauermagneten (4) zur Fläche des Trägerprofils (1) im wesentlichen parallel angeordnet ist, wobei durch mechanische Mittel ein definierter Luftspalt zwischen den parallelen Flächen erreicht wird,
- mit einem Antrieb, bei dem von Spulen (3) erregbare Magnetkerne (2) längs des Trägerprofils (1) angeordnet sind, die zusammen mit dem Trägerprofil (1) geschlossene Eisenwege bilden, deren Teilsättigungen durch Erregung der Spulen (3) veränderbar sind.

2. Antriebssystem nach Anspruch 1, bei dem von Spulen (3) umgebene Spulenkerne (2) zwischen die vertikale Wände zweier Tragschienen (1) angeordnet sind, wobei die vertikalen Tragschienen-Wände auch den Dauermagneten (4) zwischen sich aufnehmen (Fig. 1, 2).

3. Antriebssystem nach Anspruch 1, bei dem mehrere von Spulen (3) umgebene Spulenkerne (2) durch ein Joch (7) miteinander verbunden sind und die entgegengesetzten Enden der Spulenkerne (2) senkrecht an eine Profilwand des Trägerprofils (1) angeordnet sind, an deren senkrechte Flächen zweimal zwei Dauermagneten (4, 5) angeordnet sind (Fig. 3, 4).

4. Antriebssystem nach Anspruch 1, bei dem von Spulen (3) umgebene Spulenkerne (2) im wesentlichen parallel zu einem Trägerprofils (1) angeordnet sind, wobei die beiden Enden jedes Spulenkernes (2) durch je einen Polschuh (9) mit der horizontale Fläche des Trägerprofils (1) verbunden sind, und an den beiden senkrechte Flächen des Trägerprofils (1) zweimal zwei Dauermagneten (4, 5) angeordnet sind (Fig. 5, 6).

5. Antriebssystem nach Anspruch 1, bei dem mehrere von Spulen (3) umgebene Spulenkerne (2) durch ein Joch (7) miteinander verbunden sind und die entgegengesetzten Enden der Spulenkerne (2) senkrecht an das horizontale Querprofil eines Trägerprofils (1) angeordnet sind, an deren senkrechte Flächen zweimal zwei Dauermagneten (4, 5) angeordnet sind (Fig. 7, 8).

6. Antriebssystem nach Anspruch 1, bei dem jeweils zwei von Spulen (3) umgebene Spulenkerne (2) durch ein Joch (7) miteinander verbunden sind und die entgegengesetzten Enden der Spulenkerne (2) senkrecht an eine Profilwand des Trägerprofils (1) angeordnet sind, wobei die mit dem Joch (7) verbundenen Spulenpaare (3) auf der Profilwand schräg überlappend aufgesetzt sind, an deren senkrechte Flächen zweimal zwei Dauermagneten (4, 5) angeordnet sind (Fig. 10, 11).

7. Antriebssystem nach Anspruch 1, bei dem mehrere von Spulen (3) umgebene Spulenkerne (2) durch ein Joch (7) miteinander verbunden sind und die entgegengesetzten Enden der Spulenkerne (2) senkrecht auf das als horizontal angeordnete Tragschiene ausgebildete Trägerprofil (1) aufgesetzt sind, an deren andere horizontale Profilwand mindestens ein Dauermagnet (4) angeordnet ist (Fig. 12, 13).

8. Antriebssystem nach Anspruch 1, bei dem von Spulen (3) umgebene Spulenkerne (2) im wesentlichen parallel zu dem als horizontale Tragschiene ausgebildete Trägerprofil (1) angeordnet sind, wobei die beiden Enden jedes Spulenkernes (2) durch Polschuhe (9) senkrecht mit der horizontalen Tragschiene (1) verbunden sind, an deren andere horizontale Profilwand mindestens ein Dauermagnet (4) angeordnet ist (Fig. 14, 15).

9. Antriebssystem nach einem der vorhergehenden Ansprüche, wonach die Spulen (3) mit einem Wechselstrom (Hochfrequenz) beschickt werden, sodaß die Messung und Auswertung aller Spulenströme im Sinne einer Sensorik eine Lokalisierung der Dauermagnete (4) mit der Last ermöglicht.

10. Antriebssystem nach einem der vorhergehenden Ansprüche, wobei zur Vermeidung des Dreh-/Kippverhaltens der Last bei Beginn der Bewegung die Polung des Gleichstroms, mit dem die Spulen (3) zu beschicken sind, so gewählt wird, daß die Spule (13) in Fahrtrichtung vor einem Dauermagneten (4) einen Zug nach schräg oben erzeugt (Vektor 17) und die Spule (14) in Fahrtrichtung hinter einem Dauermagneten (4) einen Schub (Vektor 20) nach schräg unten bewirkt (Fig. 16).

11. Antriebssystem nach einem der vorhergehenden Ansprüche, wobei die Spulen (3) mit einem geeignet gepolten und hinreichend starken Gleichstromimpuls das darunter befindliche Dauermagnetfeld vorübergehend so stark abschwächen, daß die Schwebe- und Tragefunktion abreißt und die Last absinkt, um sie mit einem umgekehrt gepolten genügend starken Gleichstromimpuls durch die daraus resultierende Verstärkung des Dauermagnetfeldes wieder in die vorherige Ebene zurückzuheben, falls dies nicht aus dauermagnetischer Anziehungskraft heraus geschieht.

12. Antriebssystem nach einem der vorhergehenden Ansprüche, wobei das Trägerprofil (1) Aussparungen (22) sowie Luftspalte (23) an jenen Stellen aufweisen kann, die geeignet sind, die für den Antrieb erforderliche Kopplung von dauer- und elektromagnetischen Kraftfeldern im Trägerprofil so stark wie möglich zu konzentrieren.

13. Antriebssystem nach einem der vorhergehenden Ansprüche, wobei im Falle von mehr als einem Dauermagnetpaar (4, 5) je Tragekopf (6) die dem Trägerprofil (1) abgewandten Polflächen der Dauermagnete pro Tragekopfseite durch ein ferromagnetisches Rückschlußeisen (10) miteinander verbunden sind.

## Claims

1. Electromagnetic drive system for magnetic levitation and support systems,
- with at least one permanent magnet (4) to which the load is attached, and with at least one stationary, soft magnetic carrier profile (1), the pole face of said permanent magnet (4) being disposed essentially parallel to the surface of the said carrier profile (1) and there being mechanical means by which a defined air gap is obtained between the parallel surfaces,
- with a drive in which magnetic cores (2) energizable by coils (3) are positioned along the carrier profile (1) and together with the carrier profile (1) form closed magnetic circuits whose partial saturation can be varied by energizing the coils (3).

2. The drive system of claim 1, in which cores (2) surrounded by coils (3) are positioned between the vertical walls of two supporting rails (1), the permanent magnet (4) also being accommodated between the vertical walls of the supporting rails (Figs. 1,2).

3. The drive system of claim 1, in which a plurality of cores (2) surrounded by coils (3) are interconnected by a yoke (7), the opposite ends of the cores (2) being arranged at right angles on a profiled wall of the carrier profile (1) at whose vertical surfaces two pairs of permanent magnets (4,5) are located (Figs. 3,4).

4. The drive system of claim 1, in which cores (2) surrounded by coils (3) are positioned essentially parallel to a carrier profile (1), each of the two ends of each core (2) being connected by a pole shoe (9) with the horizontal surface of the carrier profile (1), and two pairs of permanent magnets (4,5) being positioned at the two vertical surfaces of the carrier profile (1) (Figs. 5,6).

5. The drive system of claim 1, in which a plurality of cores (2) surrounded by coils (3) are interconnected by a yoke (7), the opposite ends of the cores (2) being disposed at right angles on the horizontal transverse profile of a carrier profile (1) at whose vertical surfaces two pairs of permanent magnets (4,5) are located (Figs. 7,8).

6. The drive system of claim 1, in which cores (2) surrounded by coils (3) are interconnected pairwise by a yoke (7), the opposite ends of the cores (2) being disposed at right angles on a profiled wall of the carrier profile (1) at whose vertical surfaces two pairs of permanent magnets (4,5) are located, with the pairs of coils (3) connected by yoke (7) being positioned on the profile wall such that they overlap obliquely. (Figs. 10, 11).

7. The drive system of claim 1, in which a plurality of cores (2) surrounded by coils (3) are interconnected by a yoke (7), the opposite ends of the cores (2) being disposed at right angles on the carrier profile (1), the latter being designed as a horizontal supporting rail at whose other horizontal profiled wall at least one permanent magnet (4) is located (Figs. 12,13).

8. The drive system of claim 1, in which cores (2) surrounded by coils (3) are arranged essentially parallel to the carrier profile (1), which is designed as a horizontal supporting rail, the two ends of each core (2) being connected at right angles with the horizontal supporting rail (1) by means of pole shoes (9), there being at least one permanent magnet (4) located at the other horizontal profiled wall of the supporting rail (1) (Figs. 14,15).

9. Drive system according to one of the preceding claims, in which the coils (3) are supplied with (high-frequency) alternating current, so that the measurement and evaluation of all the coil currents - that serve as a sensory system - permits localisation of the permanent magnet (4) with the load.

10. Drive system according to one of the preceding claims, in which, to prevent any rotation or tipping of the load when movement commences, the polarity of the direct current supplied to the coils (3) is selected such that the coil (13) - in the direction of movement in front of a permanent magnet 4 - generates an obliquely upwards-directed pull (vector 17), and the coil (14) - in the direction of movement behind a permanent magnet (4) - generates an obliquely downwards-directed push (vector 20) (Fig. 16).

11. Drive system according to one of the preceding claims, in which the coils (3), supplied with a suitably poled and sufficiently strong pulse of direct current, temporarily weaken the permanent magnetic field beneath to such an extent that the levitation and supporting function is interrupted and the load sinks down, before being lifted back into the original plane - unless this happens anyway due to the permanent-magnetic attractive force - by means of an oppositely poled and sufficiently strong pulse of direct current which will increase the permanent magnetic field again.

12. Drive system according to one of the preceding claims, in which the carrier profile (1) can feature recesses (22) and air gaps (23) at those points which are suitable for concentrating the coupling - required for the drive - of permanent and electromagnetic fields of force as strongly as possible in the carrier profile.

13. Drive system according to one of the preceding claims, in which, for cases where there are more than one pair of permanent magnets (4,5) per supporting head (6), the permanent-magnet pole faces facing away from the carrier profile (1) are interconnected on each side of the supporting head by a ferromagnetic return member (10).

## Revendications

1. Dispositif d'entraînement électromagnétique pour systèmes de suspension et de transport
- avec au moins un aimant permanent (4) sur lequel la charge est fixée, et au moins un profilé support (1) magnétique doux stationnaire, la face polaire de l'aimant permanent (4) étant essentiellement parallèle à la surface du profilé support (1), et un entrefer déterminé, réalisé à l'aide de moyens mécaniques, existant entre les surfaces parallèles,
- avec un entraînement dans lequel des tores magnétiques (2) excités par des bobines (3) sont disposés le long du profilé support (1), les tores magnétiques (2) formant avec le profilé support (1) des voies fermées dont les saturations partielles varient en fonction de l'excitation des bobines (3).

2. Dispositif d'entraînement électromagnétique selon la revendication 1, dans lequel des tores magnétiques (2) entourés de bobines (3) sont disposés entre les parois verticales de deux rails supports (1), l'aimant permanent (4) étant également situé entre les parois verticales des profilés support (fig. 1, 2).

3. Dispositif d'entraînement électromagnétique selon la revendication 1, dans lequel plusieurs tores magnétiques (2) entourés de bobines (3) sont reliés entre eux par une culasse (7) et les extrémités opposées des tores magnétiques (2) sont montées à angle droit sur une paroi du profilé support (1), deux fois deux aimants permanents (4, 5) étant disposés sur les surfaces verticales de la paroi du profilé (fig. 3, 4).

4. Dispositif d'entraînement électromagnétique selon la revendication 1, dans lequel des tores magnétiques (2) entourés de bobines (3) sont essentiellement parallèles à un profilé support (1), les deux extrémités de chaque tore magnétique (2) étant reliées à la surface horizontale du profilé support (1) au moyen d'un épanouissement polaire (9), et deux fois deux aimants permanents
(4, 5) étant disposés sur les deux surfaces verticales du profilé support (1) (fig. 5, 6).

5. Dispositif d'entraînement électromagnétique selon la revendication 1, dans lequel plusieurs tores magnétiques (2) entourés de bobines (3) sont reliés entre eux au moyen d'une culasse (7) et les deux extrémités opposées des tores magnétiques (2) sont
disposées à angle droit sur le profil transversal horizontal d'un profilé support (1), deux fois deux aimants permanents (4, 5) étant disposés sur les surfaces verticales de ce dernier (fig. 7, 8).

6. Dispositif d'entraînement électromagnétique selon la revendication 1, dans lequel deux tores magnétiques (2), entourés de bobines (3), sont respectivement reliés entre eux par une culasse (7) et les extrémités opposées des tores magnétiques (2) sont disposées à angle droit sur une paroi du profilé support (1), les couples de bobines (3) reliés par la culasse (7) étant placés sur la paroi du profilé de façon à se chevaucher obliquement, et deux fois deux aimants permanents (4) étant disposés sur les surfaces verticales de la paroi du profilé (fig. 10, 11).

7. Dispositif d'entraînement électromagnétique selon la revendication 1, dans lequel plusieurs tores magnétiques (2) entourés de bobines (3) sont reliés entre eux au moyen d'une culasse (7) et les extrémités opposées des tores magnétiques (2) sont montées à angle droit sur le profilé support (1) ayant la forme d'un rail, un aimant permanent (4) au minimum étant disposé sur l'autre paroi horizontale du profilé (fig. 12, 13).

8. Dispositif d'entraînement électromagnétique selon la revendication 1, dans lequel des tores magnétiques (2) entourés de bobines (3) sont essentiellement parallèles au profilé support (1) ayant la forme d'un rail horizontal, les deux extrémités de chaque tore magnétique (2) étant reliées au rail support horizontal (1) au moyen d'épanouissements polaires (9), un aimant permanent (4) au minimum étant disposé sur l'autre paroi horizontale du profilé
(fig. 14, 15).

9. Dispositif d'entraînement électromagnétique selon l'une des revendications précédentes, dans lequel les bobines (3) sont alimentées par un courant alternatif (haute fréquence) de façon à pouvoir localiser les aimants permanents (4) avec la charge, en mesurant et en analysant tous les courants de bobines par technique sensorielle.

10. Dispositif d'entraînement électromagnétique selon l'une des revendications précédentes, dans lequel la polarité du courant continu qui alimentera les bobines (3) est choisie de telle sorte que la bobine (13) génère une traction (vecteur 17) en oblique vers le haut avant un aimant permanent (4), vu dans le sens du déplacement, et la bobine (14) engendre une poussée (vecteur 20) en oblique vers le bas après un aimant permanent (4), vu dans le sens du déplacement, afin d'éviter que la charge tourne ou bascule au début du déplacement (fig. 16).

11. Dispositif d'entraînement électromagnétique selon l'une des revendications précédentes, dans lequel les bobines (3) recevant une impulsion de courant continu de polarité adéquate et suffisamment fort, s'affaiblissent temporairement de sorte qu'elles n'assurent plus la fonction de suspension et de port et font descendre la charge, qui remonte ensuite au niveau initial sous l'effet d'une impulsion suffisament forte de courant continu de polarité opposée, renforçant le champ de l'aimant permanent, si cela n'est pas provoqué par la force d'attraction de l'aimantation permanente.

12. Dispositif d'entraînement électromagnétique selon l'une des revendications précédentes, dans lequel le profilé support (1) peut présenter des évidements (22) ainsi qu'un entrefer (23) à des endroits appropriés pour concentrer au maximum le couplage des champs des forces d'aimantation permanente et électromagnétiques, nécessaire à l'entraînement, dans le profilé support.

13. Dispositif d'entraînement électromagnétique selon l'une des revendications précédentes, dans lequel, s'il y a plus d'un couple d'aimants permanents (4, 5) par tête support (6), les faces polaires des aimants permanents, opposées au profilé support, sont reliées entre elles par un matériau ferromanétique (10) de reflux de chaque côté de la tête support.
